# EUROPEAN PATENT APPLICATION

(11) **EP 4 272 906 A1**
(43) Date of publication of application: **08.11.2023**
(21) Application number: 22172064.2
(22) Date of filing: 06.05.2022
(51) Int. Cl.: B25J 9/16

(54) **METHOD FOR OPERATING A MANUFACTURING ROBOT AND MANUFACTURING ROBOT**

(71) Applicant: Bayerische Motoren Werke Aktiengesellschaft, 80809 München (DE)
(72) Inventor: Park, Chulhun, Greer, 29651 (US)

(57) **Abstract**

The invention relates to a method for operating a manufacturing robot (1) comprising a robot arm (2) on which a tool (3) and a scanning device (4) are arranged, wherein the scanning device (4) is configured to determine the position and shape of an object (5), the method comprising the following steps:
- Detecting a calibration unit (6), which comprises at least three spheres (7) and has a predetermined absolute position, by the scanning device (4); (S1)
- Determining a relative position between the scanning device (4) and the calibration unit (6); (S2)
- Determining at least one difference value between the absolute position and the relative position; and
- Providing a position correction for determining the position of the object (5) by the scanning device (4) based on the at least one difference value.

The invention further relates to a manufacturing robot (1).

## Description

The invention relates to a method for operating a manufacturing robot according to patent claim 1. The invention further relates to a manufacturing robot according to patent claim 9.

Robots are often used for manufacturing purposes. Such a robot may comprise a robot arm especially with a robot gripper, which holds a tool for processing an object. The tool can be a joining tool, for example, and the object may be part of a car body. For processing the object with the tool, it is necessary to know the position and/or the three-dimensional shape of the object.

CN 108 151 760 B shows a robot localization restoration method based on odometry.

It is the objective of the invention to provide a method and a manufacturing robot, which allow an easy recalibration of a scanning device, which is configured to determine the position and/or three-dimensional shape of an object to be processed by a tool of the manufacturing robot.

The aforementioned objective is achieved according to the invention by the subject matters of the independent patent claims. Advantages, advantageous embodiments, and further developments of the invention are the subject matter of the dependent patent claims, the description, and the drawings.

A first aspect of the invention relates to a method for operating a manufacturing robot. The manufacturing robot comprises a robot arm on which a tool and scanning device are arranged, wherein the scanning device is configured to determine the position and/or three-dimensional shape of an object to be processed by the tool. The method according to the invention comprises the following steps:
A first step is detecting a calibration unit by the scanning device. The calibration unit comprises at least three spheres, which are in particular stationary with respect to each other. The calibration unit furthermore has a predetermined absolute position with respect to the manufacturing robot.

A second step is determining a relative position between the scanning device and the calibration unit.

A third step is determining at least one difference value between the absolute position and the relative position.

A fourth step is providing a position correction for determining the position of the object with or by the scanning device based on the at least one difference value.

The scanning device is especially a device, which is configured to detect a point cloud of the object and its surroundings. The scanning device can be a laser scanner, for example, such as a LIDAR, Time of Flight Sensor, or Structured Light Sensor. The absolute position of the calibration unit is especially fixed and known. The absolute position determines for example the direction and orientation relative to a fixed part of the manufacturing robot, wherein the fixed part could be a ground plate. The tool and the scanning device are especially arranged at an end of the arm gripper of the robot arm.

A point cloud is a digital 3D representation of a physical object or space. It can consist of millions of individual measurement points, each one with an x, y, and z coordinate. The points may represent a 3D shape or object. Point clouds are generally produced by 3D scanners - like the scanning device, for example a camera or a laser scanner - or by photogrammetry software, which measure many points on the external surfaces of objects around them. In this method or this application, respectively, finding each centre of the spheres is the main purpose using point clouds generated by a point cloud sensor, such as the scanning device.

In other words, the method utilizes a 3D point cloud sensor to measure three or more spheres and finds especially their centre point or centre of gravity. Three spheres are sufficient to determine the relative orientation or relative position between the calibration unit and the scanning device of the robot arm. For example, the robot can move to twelve positions +x, -x, +y, -y, +z, -z, +rx, -rx, +ry, -ry, +rz, -rz in which every position is measured with the scanning device. Depending on the accuracy, which is needed, it is preferred to use a laser scanner or, if a higher degree of precision is necessary, it is also preferable to use a laser tracker.

For determining the relative position and/or determining the difference value and/or for providing or calculating the position correction an electronic computing device may be used, for example, a personal computer.

The invention is based on the knowledge that scanning devices, for example three-dimensional point cloud sensors, are mounted on robot grippers to measure the body or form of an object. Based on body variation, for example, joining processes carried out by the manufacturing robot are adjusted. There is a possibility that small collisions occur, for example, when the robot arm or the tool touches the object.

With the method according to the invention, the robot could move to a reference target and initiate a measurement. If any deviation is found, it will automatically be compensated. The next time the robot measures the shape or body of an object its position will be adjusted and a new measurement will not be affected by a potential collision.

Compared to methods known in the prior art, where a recovery is performed manually, the inventive method is less time-consuming, less inaccurate and/or also causes less quality issues during a manufacturing process.

In an advantageous embodiment of the invention, as a further step of the method, the tool is positioned with respect to the object, especially for machining, based on the position correction. In other words, the robot arm has to be positioned to process the object with its tool. For this positioning, the correction of the position by determining the relative position depending on the absolute position is used. An advantage of this embodiment is that the manufacturing robot can be operated very precisely.

In another advantageous embodiment of the invention, the scanning device is configured to detect a point cloud of the object and/or the calibration unit and/or the position and/or the three-dimensional shape is determined based on this point cloud. In other words, the scanning device is configured to detect a point cloud and therefore, for example, a LIDAR, Time of Flight Sensor, or Structured Light Sensor is used. The point cloud is used to determine the position and/or three-dimensional shape of the object and/or the calibration unit. An advantage of this embodiment is the possibility of a very precise determination of the position and/or three-dimensional shape of the object and/or the calibration unit and/or the surroundings of the object and/or the calibration unit or the surroundings of the manufacturing robot, respectively.

In another embodiment of the invention the centre point or the centre of gravity of the respective sphere is determined for determining the relative position of the calibration unit, wherein the at least three centre points of the at least three spheres define a plane. In other words, the distance to and the orientation of the plane are determined or calculated and the result is used to determine the relative position of the calibration unit. Therefore, the centre points or centres of gravity of the spheres are used. It is one advantage of the method that the determination or estimation of the plane can be provided very efficiently by an electronic computing device.

In another embodiment of the invention, a laser scanner is used as the scanning device. In other words, the scanning device is a laser scanner, which can provide a proper point cloud to determine the position and/or three-dimensional shape of the object and its surroundings or of at least parts of the calibration unit. Additionally or alternatively, a laser tracker is used to determine the centre points of the at least three spheres. In particular, the center points of the spheres are determined in a body coordinate frame. A laser tracker is an instrument, which can measure larger objects accurately by determining the positions for example of optical targets held against those objects. These targets can be the at least three spheres of the calibration unit if they are built as reflectors for laser light. By using a laser tracer, the positions of the centres of the spheres can be determined with particular precision. The laser scanner could be a LIDAR, Time of Flight Sensor, or Structured Light Sensor for example. The advantage of this embodiment is the possibility of a very precise determination of the relative position.

In another embodiment of the invention the calibration unit comprises four spheres and/or a spherical retro reflector is used as at least one of the at least three or four spheres. In other words, four spheres are used, wherein especially the fourth sphere is also in the plane defined by the other three spheres. With four spheres, it is possible to achieve some redundancy for a very good determination of the relative position. Additionally or alternatively, at least one of the spheres is designed as a retro reflector, which is a device that reflects radiation especially light in the wavelength used by the scanning device back to its source within minimum scattering. An advantage of the retro reflector is that it is very visible for the scanning device and therefore the method can be executed for example at low light conditions.

In another embodiment of the invention a relative distance of the spheres to each other or in other words the distance of the spheres of the calibration unit to each other is adjusted based on a field of view of the scanning device. The scanning device can have a field of view that allows that the distance between the spheres of the calibration unit is larger than a certain length, because, for example, the robot arm is positioned in such a way that it has a large distance to the calibration unit. Therefore, the calibration unit is built in such a way that there is a variable distance between the spheres. This can be used to achieve the best possible determination of the relative position depending on the field of view.

In another embodiment of the invention the position correction is calculated by means of a Jacobian matrix. In other words, a vector-valued function is used, wherein vector calculus with partial derivatives are used to obtain the position correction. It is an advantage of this embodiment to have a solid basis for a comprehensible estimation of the position correction.

A second aspect of the invention relates to a manufacturing robot which comprises a robot arm on which a tool and a scanning device are arranged, and the scanning device is adapted and/or configured to determine a position and/or a three-dimensional shape of an object to be processed by the tool, and the manufacturing robot is adapted to perform a method according to the first aspect of the invention.

Advantageous embodiments and further developments of the first aspect of the invention are to be regarded as advantages and advantageous embodiments of the second aspect of the invention, and vice versa.

In an embodiment of the invention, the tool is a joining tool. In other words, the manufacturing robot is configured to process the object by welding, brazing, soldering, riveting or other mechanical fixes like screws and bolts. An advantage of this embodiment is therefore the solid control of a manufacturing process executed by the manufacturing robot.

Further features of the invention are apparent from the claims, the figures and the figure description. The features and combinations of features mentioned above in the description, as well as the features and combinations of features mentioned below in the figure description and/or shown alone in the figures, can be used not only in the combination indicated in each case, but also in other combinations or on their own.

The invention will now be explained in more detail with reference to a preferred embodiment and with reference to the drawings. These show in:

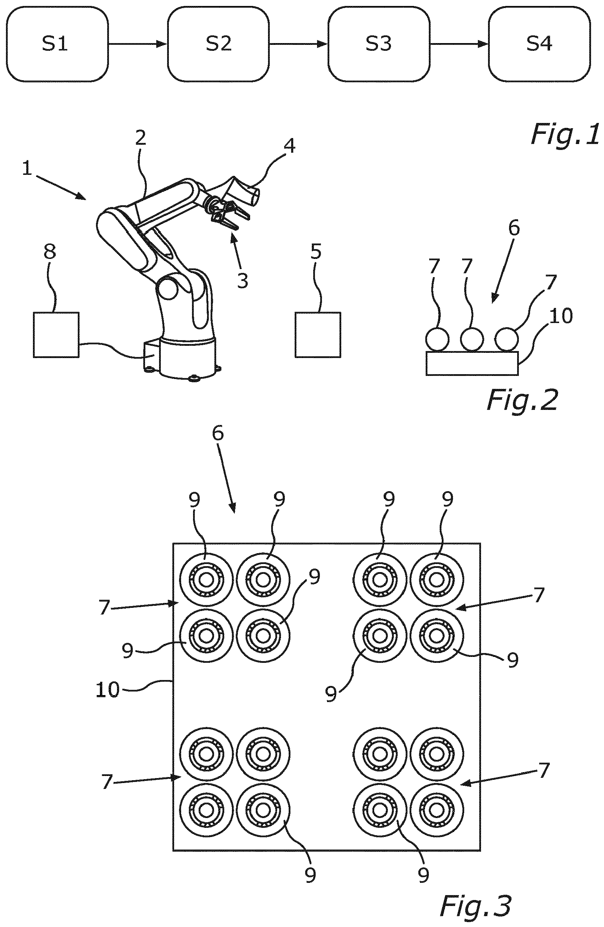

- Fig. 1: a schematic diagram of a method for operating a manufacturing robot;
- Fig. 1: a schematic side view of a manufacturing robot comprising a robot arm with a tool and a scanning device; and
- Fig. 3: a schematic top view of a calibration unit used for the method shown in Fig. 1.

Fig. 1 shows a schematic diagram of a method for operating a manufacturing robot 1 shown in Fig. 2. The robot comprises a robot arm 2 on which a tool 3 and a scanning device 4 are arranged, wherein the scanning device 4 is configured to determine a position and/or a three-dimensional shape of an object 5 to be processed by the tool 3.

The method shown comprises a number of steps:
In a step S1 detecting a calibration unit 6 is executed by the scanning device 4, wherein the calibration unit 6 comprises at least three spheres 7 and has a predetermined absolute position with respect to the manufacturing robot 1.

In a step S2 determining a relative position between the scanning device 4 and the calibration unit 6 is executed. The calibration unit 6 is especially not a part of the manufacturing robot 1 or at least the robot arm 2 and is in a relative position not fixed to the movement of the robot arm 2.

In a third step S3 determining at least one difference value between the absolute position and the relative position is executed.

In a fourth step S4 a position correction for determining the position of the object 5 with or by the scanning device 4 based on the at least one difference value is provided. The position correction can be calculated by means of a Jacobian matrix.

Especially steps S2 to S4 may be executed by an electronic computing device 8.

The method may include another step, which is not shown in Fig. 1. In this step the tool 3 is positioned especially by the robot arm 2 with respect to the object 5 based on the position correction calculated or determined in step S4.

Advantageously, the scanning device 4 is configured to detect a point cloud of the object 5 and/or the calibration unit 6 and/or the position and/or the three-dimensional shape is determined on the basis of this respective point cloud. Therefore, it is advantageous that the scanning device 4 is configured as a laser scanner. Additionally or alternatively, a laser tracker is used besides the scanning device 4 to determine the centre points of the at least three spheres 7.

For a particularly beneficial position correction each centre point of the respective sphere 7 is determined for determining the relative position of the calibration unit 6, wherein the at least three centre points of the at least three spheres 7 define a plane.

For the purpose of redundancy the calibration unit 6 can comprise especially four spheres 7. Additionally or alternatively, at least one of the spheres 7 is configured as a spherical retro reflector.

Fig. 2 shows the manufacturing robot 1 comprising the robot arm 2 on which the tool 3 and the scanning device 4 are arranged and the scanning device 4 is adapted to determine the position and/or three-dimensional shape of an object 5 to be processed by the tool 3, and the manufacturing robot 1 is adapted especially to perform a method as shown in Fig. 1.

The object 5 can especially be a body part of an automobile, wherein the manufacturing robot 1 has a tool, which is especially configured as a joining tool, for example for welding.

Fig. 3 shows a top view of the calibration unit 6, wherein there are four quadrants each containing four positioning elements 9. Each of the positioning elements 9 is configured in such a way that one of the spheres 7 can be mounted or positioned on it. The position of the spheres 7 relative to each other and/or the distance between the spheres 7 of the calibration unit 6 can be adjusted based on a field of view of the scanning device 4. For example, if there is a narrow field of view of the scanning device 4, maybe due to the distance between the robot arm 2 and the object 5, all of the three, four or more spheres 7 can be mounted in one of the quadrants shown in Fig. 3. If there is a wider field of view, each of the spheres 7 can be mounted in a separate quadrant of the calibration unit 6 shown in Fig. 3.

A base 10 for the positioning elements 9 and the calibration unit 6 may be configured to comprise an optical breadboard for example.

Each of the spheres 7 may be designed as a spherically mounted retro reflector (SMT), a theodolite sphere, photogrammetry sphere, or other spherical type targets or accessories on a centre line of a threaded hole and 1.000" above or optical 25mm above the breadboard or the positioning element 9.

Another precision scan sphere (PSS) can be used for at least one of the spheres 7, which provided the same centre line value as a 1.500" spherical mounted retro reflector. This allows interchangeability of targeting from laser tracker systems to laser scanner systems.

Additionally or alternatively, at least one of the spheres 7 may be configured as a ball-mounted retro reflector (BMR), which for example can be manufactured with the apex of the retro reflector aligned with the absolute centre of a steel ball within two centring accuracies, 0.0005" and 0.0001". This increase in accuracy can significantly improve the performance of determine the relative position.

The optical breadboard of the base 10 should be accurate enough for axis creation, for example, close to 90 degrees, if especially three spheres 7 in a triangle shape or four spheres 7 in a rectangle shape are used.

A problem avoided by the method and manufacturing robot 1 is the misalignment of the scanning device 4, which is mounted on the end of the robot arm 2 and which changes its position over time due to tool deformation or small collisions.

The pattern of the three spheres 7 on the base 10, especially the breadboard 10, can be random, but if they are arranged in a certain pattern, especially with regular spacing, determining the relative position is rendered particularly easy.

If the field of view does not cover a large area, modified spheres 7 can be used in order to identify the centre of the shape. This is possible for cameras, which at least need to see partial spheres 7 sufficient to identify the centre of the spheres 7.

In an initial setup for the correction the robot arm 2 may be moved along +/- x, y and z and after this may be moved to +/- rx, ry and rz.

At each robot position or position of the robot arm 2 and therefore position of the scanning device 4 and/or the tool 3, measurements are executed to find the three or more spheres 7 or especially to identify the centre of each sphere 7. Thereby a camera or scanner frame and a robot frame can be mapped with assumption of linearity. For example, the final form will be a Jacobian matrix 12x6, which describes the relationship of the scanning device 4 and the robot arm 2.

In the case of a minor crash or a distortion occurring at the end of the arm gripper, sensors will sense shifted perspectives, which results in an incorrect sensor reading. In this case, the robot simply moves to the measurement position, which is the same position as the initial setup, and performs the measuring operation. For example, four measurement results, one for each centre of the sphere fit, are found. If they are different, it is easy to calculate the best fit offset in the form of x, y, z, rx, ry and rz from the Jacobian matrix.

From the initial setup, the sensor frame is already mapped to the robot frame. Thus, when the robot moves to the measurement position, it moves to a previously taught position then applies the transform identified from four point best fit. Finally, this measurement position is exactly the same position as previously commissioned.

Especially for laser trackers to determine the centre of the spheres 7, those can be found with high accuracy compared to 0.05 mm. By using a laser tracker and finding the centres of the spheres 7 the xyz positions can be represented in a body coordinate frame of the object 5. In an exemplary application in automobile manufacturing, its origin may be the centre of the front wheels, if the object 5 is at least a partial car so +x can be mapped to the front view, +y pointing from left to right, and +z pointing upwards.

When the at least partial Car is transferred by the robot, for example, it may sit on pins and surfaces. By measuring these pins/surfaces with the laser tracker the Body coordinate frame can be determined. The laser tracker can be placed anywhere for measuring the targets and creating the body frame, for example, by measuring 4 BMR centres. These BMR have the same values as the centres of PPS, which are measured with the point cloud sensor, the scanning device 4, mounted on manufacturing robot 1. For example, 4 centre points are determined with the laser tracker and 4 centre points are determined with the point cloud sensor, all of which are present in the body frame. A transform can be found therefore so that all points can be displayed in the body frame.

N bases with BMR 1.5" can be placed for the laser tracker. Therefore a single BMR 1.5" can be used multiple times until all measured values (x, y, z) are recorded. Afterwards the laser tracker can be removed.

The scanning device 4 scans the same four sphere centres and finds four xyz-positions and these positions are represented in said coordinate frame. It is easy to find the transform from sensor to body coordinate from using four points best fit. The transformation is defined as x, y, z translation and rx, ry, rz rotation.

If the scanning device sees a deviation caused by either a small collision or tool deformation, for example, it can calculate six degree of freedom offsets and send it to the manufacturing robot 1, using sensor to body transformation.

So in short summary, sensor crash recoveries in the prior art are all manual recoveries. In such a typical recovery a worker readjusts a camera to a reference target with a certain tolerance that can vary up to 2 mm or so. After manual recovery, the next step is to adjust any positional deviation based on the result. This consumes a large amount of effort and time.

With the proposed method an automatic readjusting can be implemented, with which a compensation can be instantaneously provided without for example impairing the manufacturing quality of the object 5.

As a rule the position of all sensors mounted on the robot end-of-arm tool 3 changes over time for instance due to tooling distortion or minor collisions. Accordingly, the present invention provides a method and a manufacturing robot 1, which can compensate this problem by using commercially available devices (e.g. 1.5" SMT, BMR 1.5", PSS and an optical breadboard) in combination with the inventive idea.

### Reference Signs

- 1: manufacturing robot
- 2: robot arm
- 3: tool
- 4: scanning device
- 5: object
- 6: calibration unit
- 7: sphere
- 8: electronic computing device
- 9: positioning element
- 10: base
- S1: first step
- S2: second step
- S3: third step
- S4: fourth step

## Claims

1. Method for operating a manufacturing robot (1) comprising a robot arm (2) on which a tool (3) and a scanning device (4) are arranged, wherein the scanning device (4) is configured to determine the position and shape of an object (5) to be processed by the tool (3), the method comprising the following steps:
- Detecting a calibration unit (6), which comprises at least three spheres (7) and has a predetermined absolute position with respect to the manufacturing robot (1), by the scanning device (4); (S1)
- Determining a relative position between the scanning device (4) and the calibration unit (6); (S2)
- Determining at least one difference value between the absolute position and the relative position; and
- Providing a position correction for determining the position of the object (5) by the scanning device (4) based on the at least one difference value.

2. Method according to claim 1,
**characterized in that**
as a further step of the method, the tool (3) is positioned with respect to the object (5) on the basis of the position correction.

3. Method according to claim 1 or 2,
**characterized in that**
the scanning device (4) is configured to detect a point cloud of the object (5) and/or the calibration unit (6) and/or the position and/or the shape is determined on the basis of the point cloud.

4. Method according to any one of the preceding claims,
**characterized in that**
the centre point of the respective sphere (7) is determined for determining the relative position of the calibration unit (6), wherein the at least three centre points of the at least three spheres (7) define a plane.

5. Method according to any one of the preceding claims,
**characterized in that**
a laser scanner is used as the scanning device (4) and/or a laser tracker is used to determine the centre points of the at least three spheres (7).

6. Method according to any one of the preceding claims,
**characterized in that**
the calibration unit (6) comprises four spheres (7) and/or a spherical retro-reflector is used as at least one of the spheres (7).

7. Method according to any one of the preceding claims,
**characterized in that**
a distance of the spheres (7) of the calibration unit (6) to each other is adjusted based on a field of view of the scanning device (4).

8. Method according to any one of the preceding claims,
**characterized in that**
the position correction is calculated by means of a Jacobian matrix.

9. Manufacturing robot (1) comprising a robot arm (2) on which a tool (3) and a scanning device (4) are arranged, and the scanning device (4) is adapted to determine the position and/or shape of an object (5) to be processed by the tool (3), and the manufacturing robot (1) is adapted to perform a method according to any one of the preceding claims.

10. Manufacturing robot according to claim 9,
**characterized in that**
the tool (3) is a joining tool.
